# EUROPÄISCHE PATENTSCHRIFT

(11) **EP 1 439 051 B1**
(45) Veröffentlichungstag und Bekanntmachung des Hinweises auf die Patenterteilung: **23.09.2015**
(21) Anmeldenummer: 04008054.1
(22) Anmeldetag: 28.03.2002
(51) Int. Cl.: B29C 67/00, B29C 33/68, B29C 37/00

(54) **Vorrichtung und Verfahren für die zerstörungsfreie Trennung ausgehärteter Materialschichten von einer planen Bauebene**
Apparatus and process for the non-destructive separation of a layer of cured material from a flat support
Appareil et procédé de séparation non destructive d'une couche de matériau polymérisé d'un plan de travail

(30) Priorität: 23.04.2001 DE 10119817
(43) Veröffentlichungstag der Anmeldung: 21.07.2004
(62) Teilanmeldung aus: 02007414.2
(73) Patentinhaber: Envisiontec GmbH, 45768 Marl (DE)
(72) Erfinder: John, Hendrik, 46569 Hünxe (DE)
(74) Vertreter: Hofer, Dorothea

(56) Entgegenhaltungen:
- DE-A- 4 125 534
- JP-A- H06 246 838
- US-A- 5 391 072
- US-A- 5 447 822
- US-A- 5 529 473

## Beschreibung

Die Erfindung betrifft eine Vorrichtung und ein Verfahren Verfahren für die zerstörungsfreie Trennung ausgehärteter Materialschichten von einer planen Bauebene.

Für den schichtweisen Aufbau dreidimensionaler Objekte aus "lichthärtenden" Photopolymeren werden in der Literatur unterschiedlichste Verfahren angegeben, siehe hierzu "Automated Fabrication - Improving Productivity in Manufacturing" von Marshall Burns, 1993 (ISBN 0-13-119462-3).

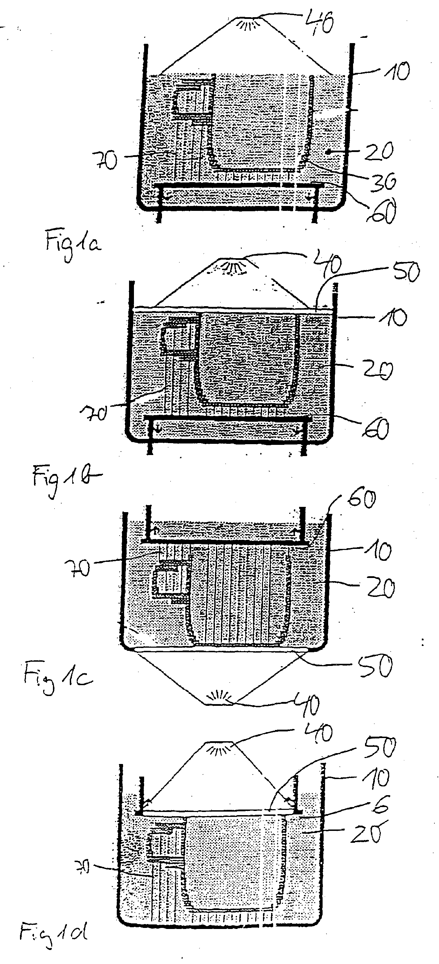

Unter die beschriebenen Verfahren fallen drei Varianten, bei der die zu erzeugende Schicht an einer transparenten Referenzebene, ein sogenanntes "Contact Window" (Kontakt-Fenster), durch diese hindurch selektiv belichtet wird und polymerisiert/aushärtet. Die drei Varianten sind in Abb. 1a bis c skizziert. In den Figuren bezeichnet 10 einen Behälter, 20 ein in dem Behälter befindliches flüssiges polymerisierbares Material, 30 ein zu bildendes Objekt, 40 eine Lichtquelle mit einer Maskenererzeugungseinrichtung zur Abbildung eines Querschnittsbildes, 50 das Kontaktfenster, 60 eine Trägerplattform für das Objekt und 70 Stützen für das Objekt.

Das hier im folgenden beschriebene Verfahren ist eine Weiterentwicklung des in der Gebrauchsmusterschrift DE G 93 19 405.6 "vorrichtung zur Herstellung eines dreidimensionalen Objekts (Modells) nach dem Prinzip der Photoverfestigung" beschriebenen Verfahrens.

Um die ausgehärtete Masterialschicht von dem Kontaktfenster / der Referenzebene trennen zu können, wird in den Patentschriften US 5,171,490 (Efrem V. Fudim) und DE 41 25 534 A1 (EOS GmbH, Electro Optical Systems) eine Lösung für eine Trennschicht mit Hilfe einer dünnen Folie aus felxiblem Kunsstoff beschrieben.

Bei der selektiven Belichtung durch Laser oder Maske in unterschiedlich geformten Flächenstrukturen direkt an einer, der Strahlungsquelle gegenüberliegenden Seite einer transparenten Referenzebene, polymerisiert das Harz in direktem Kontakt mit dieser Referenzebene aus. Die Problematik besteht darin, die in Ihrer Flächenstruktur unterschiedlich ausgebildete Schicht so von der transparenten Referenzebene zu trennen, dass sie an den vorher erzeugten Schichten haften bleibt und durch die Trennkraft sowohl die entstandene Schicht als auch der bereits erzeugte Teil des Objektes nicht verformt oder gar zerstört bzw. abgerissen wird und letztendlich das Schicht für Schicht entstehende Objekt über den gesamten Bauprozeß an der Trägerplatte haften bleibt.

Durch den in den oben beschriebenen Patenten vorgeschlagenen Einsatz einer Trennfolie, wird sich der sogenannte Schäleffekt zunutze gemacht, dass heißt die Folie schält sich durch den Trennvorgang regelrecht von der ausgehärteten Polymerschicht ab, wodurch die Trennkräfte in Z-Richtung aufgrund einer Kräftevektorenzerlegung verringert werden.

Dient die Folie als Trennschicht zur transparenten Referenzebene und wird nur das zu bauende Objekt zwecks Trennung von der Referenzebene wegbewegt, ist der Trennweg deutlich größer als die eigentlich zu bauende, folgende Schichtdicke, dadurch die während des Trennvorgangs aufgebaute elastische Spannung in der Folie die notwendige Trennkraft für den eigentlichen Schälvorgang aufgebaut werden muss. Dieser Verfahr- bzw. Trennprozess kostet zusätzlich Zeit, die jeweils zur Polymerisationszeit einer Bauschicht hinzugerechnet werden muß und so wesentlich die Gesamtbauzeit des Bauprozesses bestimmt. Ausserdem besteht die Gefahr, dass sich die Folie auf Dauer plastisch verformt, "Falten/Wellen schlägt" und so keine ebene Fläche mehr bildet.Hier ist in Abhängigkeit von der Fläche der an der transparenten Referenzebene auspolymerisierten Schicht eine Adhäsionskraft zwischen Objekt bzw. ausgehärteter Schicht und transparenter Referenzebene zu überwinden. Da es sich i.d.R. um ungleichmäßige Flächenstrukturen handelt, sind die angreifenden Adhäsionskräfte ebenfalls ungleichmäßig verteilt.

Das US-Patent 5,529,473 offenbart eine Vorrichtung gemäß dem Oberbegriff des Anspruchs 4.

Das US-Patent 5,391,072 beschreibt eine Vorrichtung bzw. ein Verfahren zur Trennung einer auf einer planen, als Referenz dienenden Ebene ausgehärteten Materialschicht, wobei zwischen Referenzebene und der ausgehärteten Materialschicht eine semmipermerable Membran vorgesehen ist, und wobei ein die Trennung förderndes Mittel ausgehend von der Referenzebene durch die semipermerable Membran hindurchtreten gelassen wird, um nach der Aushärtung die Trennung der ausgehärteten Materialschicht zu fördern.

Das japanische Patent JP 6 246 838 A offenbart eine Vorrichtung gemäß dem Oberbegriff des Anspruchs 1.

Aufgabe der Erfindung ist es, eine Lösung für eine Trennschicht und/oder ein Trennverfahren zu schaffen, die/das unabhängig von
a) der ausgehärteten Flächengröße,
b) der Ausbildung der Flächenstruktur der ausgehärteten Schicht,
c) dem verwendeten aushärtenden Material
eine leichte Trennung der ausgehärteten Schicht von der transparenten Referenzebene ermöglicht, so dass die aktuell ausgehärtete Schicht in Verbindung mit dem bereits erzeugten Schichtaufbau in ihrer ursprünglichen Form erhalten bleibt, der nötige Verfahrweg zur Trennung minimiert und so die Bauzeit pro Schicht reduziert wird und der Prozess dabei langzeitstabil ist.

Diese Aufgabe wird durch eine Vorrichtung mit den Merkmalen nach Anspruch 1, 4 sowie durch ein Verfahren gemäß Anspruch 9 gelöst. Weiterbildungen sind in den Unteransprüchen angegeben.

Weitere Merkmale und Zweckmäßigkeiten ergeben sich aus der Beschreibung von Ausführungsbeispielen anhand der Figuren. Von den Figuren zeigen:
Fig. 1: den Stand der Technik;
Fig. 2: eine transparente Bodenplatte 2 mit darauf vorgesehener Trennschicht 1, flüssigem Photopolymer 3 und dem Objekt 5;
Fig 3a: eine Anordnung nach Fig. 2, wobei die Trennschicht 1 als transparente Folie ausgebildet ist, die zwischen der Bodenplatte und dem Photopolymer angeordnet ist;
Fig 3b bis 3c: den Vorgang des Ablösens der bereits verfestigten Schicht 4 von der Trennschicht;
Fig: 4: eine schematische Darstellung einer Vorrichtung für ein Rapid Prototyping Verfahren mit Hilfe der Photoverfestigung mit einer als Polymerisationswanne ausgeformten Trennschicht 1 und einer in z-Richtung verfahrbaren Objekthalterung 7;
Fig: 5: eine schematische Darstellung des Einspannens der elastischen Folie bzw. Trennschicht 1 auf drehbar gelagerte Rollen 8; und

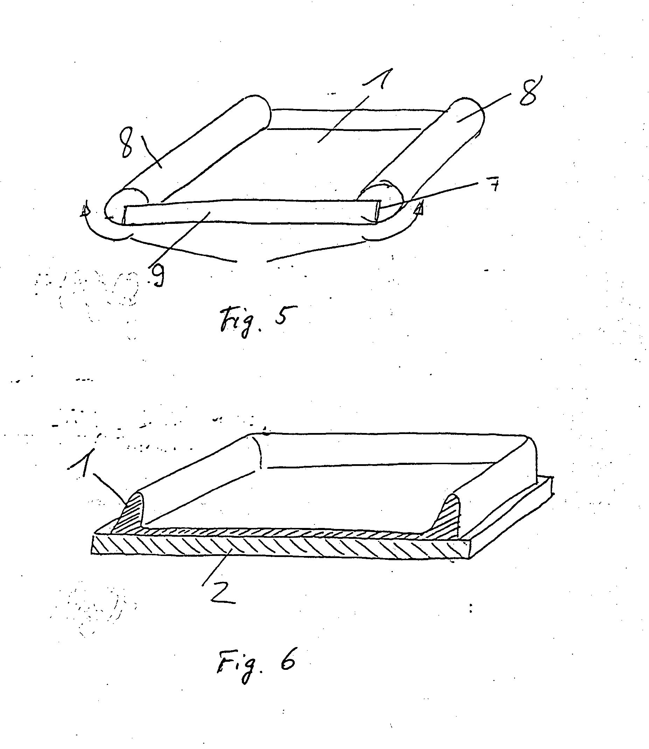

Fig 6: eine schematische Darstellung einer als Polymerisationswanne ausgeformten Trennschicht 1.

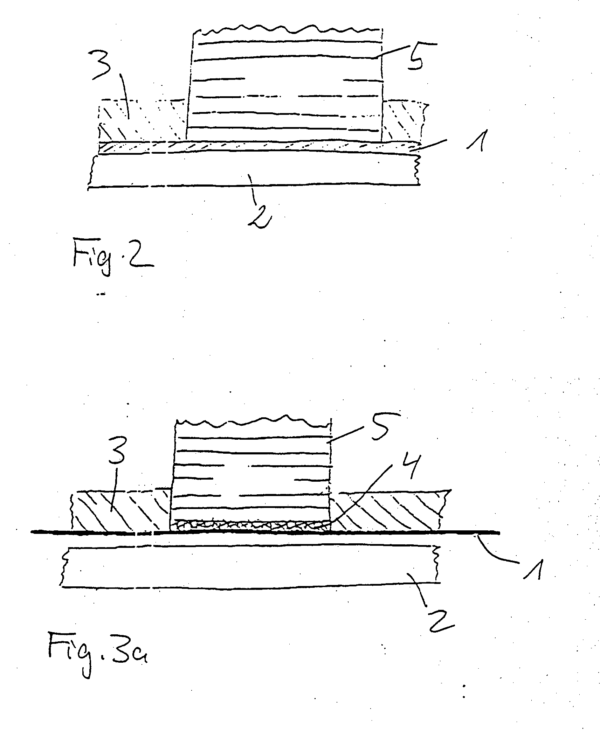

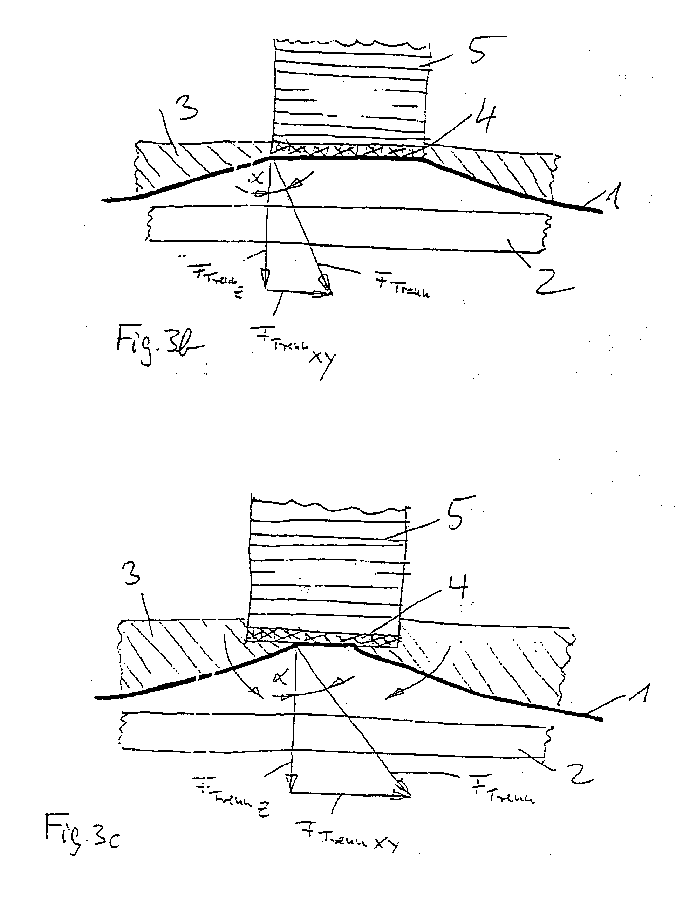

Als Trennschicht wird ein elastisches, transparentes/translucentes Material verwendet. Die Trennschicht kann bei diesem Verfahren
A) gemäß der Erfindung zwischen Material und Bodenplatte in Form einer transparenten Folie angeordnet sein, in der Form, daß die Trennschicht keine Verbindung mit der transparenten Bodenplatte eingeht (Abb. 3a).
B) bei einer Alternative, die zur Erlauterung der Erfindung dient, als direkte Beschichtung auf die transparente Bodenplatte aufgebracht werden, sodaß eine elastische Trennschicht auf der Bodenplatte entsteht (z.B. Silikon) (Abb. 2),
Zu A): Folie als Trennschicht

Als Trennschicht wird eine (transparente) Folie gewählt, die zwischen der Bodenplatte und dem Photopolymer angeordnet ist (Abb. 3a).

Da die Folie nicht an der Bodenplatte haftet und so keine feste, unverformbare Einheit mit der Bodenplatte bildet, kann sie sich während des Trennvorgangs elastisch verformen, sodaß ein sogenannter "Schäl"- oder "Abzieh"-vorgang an der ausgehärteten Schicht hervorgerufen wird. Durch die elastische Verformung der Trennschicht bzw. den Abziehvorgang findet eine Verlagerung/Vektorzerlegung des Trennkraftvektors statt, die den Trennvorgang wesentlich erleichtert (siehe Abb. 3b-c). Dieser Vorgang kann durch das Anlegen eines Unterdruckes an den Zwischenraum zwischen Folie und Bodenplatte noch verstärkt werden und hat weiterhin den Vorteil, dass die ausgehärtete Schicht nur in dem Mass der folgenden Schichtdicke von der Bauebene weg bewegt werden muss.

Das Material der Folie kann je nach verwendetem Photopolymer für den Trennvorgang ausgewählt, bzw. optimiert werden.

Ein zusätzlicher "Antihaft"-Effekt und die leichte Inhibierung der radikalen Polymerisation bei Acrylat-Systemen kann z.B. durch den Einsatz von FEP-, PTFE- oder PFA-Folien zusätzlich hervorgerunfen werden.

Die Folie kann bei Beschädigung oder Abnutzung unproblematisch ausgewechselt werden.

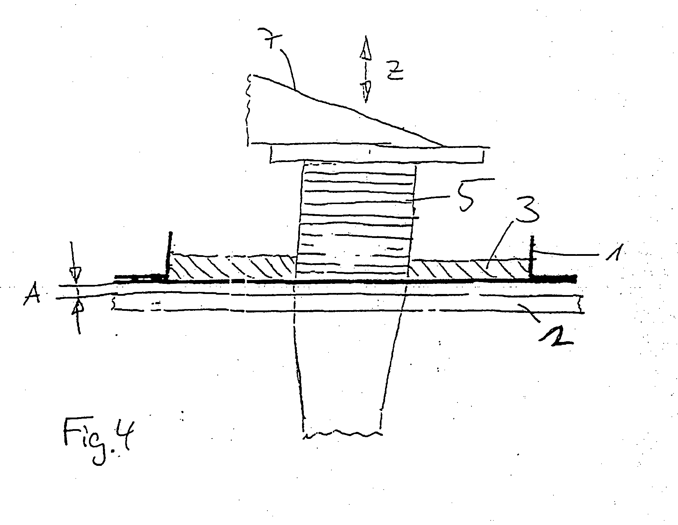

Zur Verbesserung der Wartung oder Reinigung des Gerätes kann die Folie in Verbindung mit einem zusätzlichen Rahmen aus dem selben oder anderem Material zu einer Art "Becken" ausgebildet werden (siehe Abb. 4), mit dem verbleibenden Restmaterial (Photopolymer) in ausgehärteter Form leicht entfernt und entsorgt werden kann. In einer Weiterbildung der Trennvorrichtung kann das Becken bestehend aus Rahmen und Folie eine auswechselbare Einheit bilden.

Wird eine Folie aus einem hochelastischen Material wie z.B. Latex oder Silikonkautschuk verwendet, kann sich für den Trennvorgang zusätzlich ein Schereffekt zunutze gemacht werden. Dieser Effekt wird durch ein Dehnen der Folie in der Referenzebene während des Trennvorgangs hervorgerufen. Durch die Kombination von Schäl- und Schereffekt wird die Trennung erleichtert und der Trennweg beschränkt sich auf den Abstand der nächsten Schichtdicke.

Die Anordnung in Abb. 4 zeigt eine Vorrichtung für eine Rapid Prototyping Verfahren mit Hilfe der Photoverfestigung, wobei sich in einem Becken mit einer transparenten Bodenplatte (z.B. aus Glas) und einer darüber gespannten ebenso transparenten Folie ein flüssiges Material (lichthärtender Kunststoff) befindet. Die Folie ist dabei so im Randbereich des Beckens zwischen Rahmen und Bodenplatte eingespannt, dass ein Abstand zwischen Bodenplatte und Folie gewährleistet wird, welcher die Haftung der Folie im gespannten Zustand an der Bodenplatte verhindern würde und eine Luftzu- und -abfuhr zum/vom Zwischenraum zwischen Folie und Bodenplatte ermöglicht.

Über dem Becken befindet sich eine Trägerplatte die in vertikaler Richtung zur Bodenplatte durch eine Lineareinheit angehoben und abgesenkt werden kann.

Für die erste Schicht wird die Trägerplatte soweit in das Material eingetaucht, dass die Tiefenhärtung des selektiv belichteten Photopolymers (z.B. durch Multimedia Projektor oder Laser) eine feste Haftung an der Unterseite der Trägerplatte gewährleistet.

Wird die Trägerplatte mit samt der ausgehärteten Schicht(en) angehoben, löst sich die Folie von der Unterseite der ausgehärteten Materialschicht durch eine Art Schäl-/Abziehvorgang, wenn die Kraftvektoren zwischen ausgehärteter Materialschicht und Folie zur Trennung eine ausreichend große horizontale Komponente (F _{Trenn XY}) aufweisen (Abb. 3a-c).

Die horizontale Kraftkomponente (F _{Trenn XY}) kommt dadurch zustande, dass sich beim Anheben des Objektes die Folie zwischen Rahmeneinspannung und dem an der ausgehärteten Materialschicht haftenden Bereich elastisch verformt bzw. spannt und sich mit dem verändernden Anstellwinkel α der Folie zur Materialschicht auch die Kraftangriffsrichtung aus der senkrechten heraus bewegt.

Die Trägerplatte muß dabei soweit angehoben werden, daß sich die Folie vollständig von der ausgehärteten Fläche trennen und durch anschließende Relaxation in ihren Ursprungszustand zurückkehren kann.

Frisches, flüssiges Material für die folgende auszuhärtende Schicht wird automatisch durch den wachsenden, keilförmigen Spalt zwischen Folie und ausgehärteter Schicht während des Trennvorgangs mitgenommen.

Erreicht die Folie z.B. eine ausreichende Eigensteifigkeit oder ist ausreichend gespannt, kann u.U. auf die transparente Referenzplatte ganz verzichtet werden.

In einer weiteren Ausführungsform sind Folie und transparente Referenzplatte so angeordnet, daß zwischen Platte und Folie ein flache Kammer ausgebildet ist, die mit einem flüssigen oder gasförmigen Medium gefüllt ist. An die Kammer kann ein Unterdruck angelegt werden, um den Trenn-/Abschälvorgang zu beschleunigen und das Anheben/Absenken der Trägerplatte samt Objekt beim Trennvorgang auf ein Minimum, nämlich die folgende Schichtdicke zu reduzieren.

Der Unterdruck wird dann angelegt, wenn das Objekt auf die nächste Schichtdicke angehoben ist, um die elastische Verformung der Folie zu forcieren und den Anstellwinkel α der Folie im Randbereich außerhalb der Kontur der anhaftenden ausgehärteten Fläche bis zum Einsetzten des Abschälvorgangs zu vergrößern.

Der Unterdruck wird so lange angelegt, bis sich die Folie komplett von der ausgehärteten Schicht abgelöst und relaxiert hat.

In einer Weiterbildung der Trennvorrichtung kann die Folie in Form von flexiblem Dünnglas eingesetzt werden. Um das Problem der plastischen Verformung und des Kriechens der Folie im Dauerbetrieb zu vermeiden, kann eine hoch elastische Folie eingesetzt werden, die während des Trennvorgangs gedehnt wird. Dazu wird die Folie z.B. über zwei gegenüberliegende Rollen eingespannt (siehe Abb. 5) und durch beidseitig "Aufrollen" gedehnt und anschließendes "Abrollen" wieder in den Urzustand zurückgeführt. Durch die so gleichmäßige Dehnung der Folie in entgegengesetzte Richtungen verjungt sich die Foliendicke temporär und zusätzliche Scheerkräfte treten auf.

Die Einspannung der Folie zwischen den in einem. Rahmen gehaltenenen Rollen kann dabei so gestaltet sein, dass ein Becken entsteht, in dem sich das flüssige Photopolymer befindet (siehe Abb. 5). In einer Weiterbildung der Trennvorrichtung kann das Becken bestehend aus Rahmen, Rollen und eingespannter Folie eine auswechselbare Einheit bilden.

Eine zur Erläuterung der Erfindung beschriebene Alternative zur Folie bietet das Auftragen einer optisch transparenten Silikonschicht auf der zum Photopolymer orientierten Glasplatte. Beim Trennvorgang verhält sich die dem Photopolymer zugewandte Silikonschicht vom Prinzip her ähnlich der Folie, d.h. in der gesamten Silikonschicht findet eine elastische Verformung statt und die inneren Spannungen in der Silikonschicht führen dazu, daß sich die an der ausgehärteten Materialschicht haftenden Bereiche der Silikonschicht abschälen.

Wichtig ist hierbei, daß eine gute Haftung der Silikonschicht an der Bodenplatte (Glasplatte) gewährleistet ist, bzw. die Haftung zwischen Silikonschicht und Bodenplatte um ein Vielfaches größer ist als die Haftung zwischen Silikonschicht und ausgehärtetem Material.

Durch das Ausformen eines Rahmens aus dem selben Silikonmaterial ensteht ebenfalls ein Becken zur Aufnahme des flüssigen Photopolymers (siehe Abb. 6).

Die oben beschriebenen Verfahren mit Folie oder Silikon sind nicht auf die oben beschriebene Anordnung beschränkt. Ihr Einsatz ist auch in den skizzierten Varianten, siehe Abb. 1a-c. denkbar, sowie z.B. in der Anordnung aus der Gebrauchsmusterschrift DE G 93 19 405.6 "vorrichtung zur Herstellung eines dreidimensionalen Objekts (Modells) nach dem Prinzip der Photoverfestigung".

## Patentansprüche

1. Vorrichtung zur Trennung einer, auf einer planen, als Referenz dienenden Ebene (2) ausgehärteten Materialschicht (4) mit Hilfe einer zwischen Ebene und Materialschicht angeordneten flexiblen, elastischen Trennschicht (1) ausgebildet in Form einer Folie, wobei ein gasförmiges oder flüssiges Medium zwischen Folie und Ebene strömen kann,
**dadurch gekennzeichnet, dass** die Folie nicht an der Ebene haftet und dass zwischen Ebene (2) und Folie (1) eine flache Kammer ausgebildet ist, wobei die Folie (1) in einem Rahmen eingespannt ist und in Kombination mit diesem eine Einheit bildet und als Aufnahmebecken für das Material dient.

2. Vorrichtung nach Anspruch 1,
**dadurch gekennzeichnet, dass** das Aufnahmebecken bestehend aus Rahmen und Folie eine auswechselbare Einheit bildet.

3. Vorrichtung nach Anspruch 1 oder 2,
**dadurch gekennzeichnet, dass** die Folie in Form von flexiblem Dünnglas eingesetzt wird.

4. Vorrichtung zur Trennung einer, auf einer planen, als Referenz dienenden Ebene (2) ausgehärteten Materialschicht (4) mit Hilfe einer zwischen Ebene und Materialschicht angeordneten flexiblen, elastischen Trennschicht (1), wobei:
- die elastische Trennschicht in Form einer hochelastischen Folie (1) ausgebildet ist, und
- die Folie (1) während des Trennvorganges in der Referenzebene gedehnt wird, dardurch gekennzeichnet, dass
- die Folie (1) nicht an der Ebene (2) haftet, und
- die hochelastische Folie (1) in Verbindung mit einem zusätzlichen Rahmen aus dem selben oder anderen Material zu einer Art Becken ausgebildet wird, in welchem sich ein lichthärtendes, flüssiges Material befindet.

5. Vorrichtung nach Anspruch 4,
**dadurch gekennzeichnet, dass** der Rahmen des Beckens dadurch gebildet wird, dass die Folie in zwei gegenüberliegende Rollen eingespannt wird und durch entgegengesetztes Drehen der Rollen gedehnt werden kann.

6. Vorrichtung nach Anspruch 5,
**dadurch gekennzeichnet, dass** die Rollen in einem Rahmen gehalten werden und zusammen mit der eingespannten Folie eine Art Aufnahmebecken für das flüssige Photopolymer bilden.

7. Vorrichtung nach Anspruch 6,
**dadurch gekennzeichnet, dass** das Aufnahmebecken bestehend aus Rahmen, Rollen und eingespannter Folie eine auswechselbare Einheit bildet.

8. Vorrichtung nach Anspruch 1 oder 4,
**dadurch gekennzeichnet, dass** die Referenzebene als transparente Platte ausgebildet ist, und die Trennschicht ebenfalls transparent ist.

9. Verfahren zur Trennung einer, auf einer planen, als Referenz dienenden Ebene (2) ausgehärteten Materialschicht (4) mit Hilfe einer zwischen Ebene und Materialschicht angeordneten flexiblen, elastischen Trennschicht (1), ausgebildet in Form einer Folie, bei dem eine Vorrichtung nach einem der Ansprüche 1 bis 8 verwendet wird.

## Claims

1. Device for separating a material layer (4) having been hardened on a flat plane (2) which serves as a reference, by means of a flexible, elastic separation layer (1) formed in the form of a sheet and arranged between the plane and the material layer, wherein a gaseous or liquid medium can flow between the sheet and the plane,
**characterized in that** the sheet is not adhered to the plane and a flat chamber is formed between plane (2) and sheet (1), wherein the sheet (1) is mounted in a frame and forms a unit in combination with it and serves as holding basin for the material.

2. Device according to claim 1,
**characterized in that** the holding basin, composed of frame and sheet, forms an exchangeable unit.

3. Device according to claim 1 or 2,
**characterized in that** the sheet is inserted in the form of flexible thin glass.

4. Device for separating a material layer (4) having been hardened on a flat plane (2) which serves as a reference, by means of a flexible, elastic separation layer (1) formed in the form of a sheet and arranged between the plane and the material layer, wherein:
- the elastic separation layer is formed in the form of a highly elastic sheet (1), and **characterized in that** the sheet (1) is stretched during the separation process in the reference plane,
- the sheet (1) is not adhered to the plane (2), and
- the highly elastic sheet (1) is formed in combination with an additional frame made of the same or another material to a kind of basin, wherein a photohardening liquid material is provided.

5. Device according to claim 4,
**characterized in that** the frame of the basin is formed by mounting the sheet into opposed rollers and being able to be stretched via opposite rotation of the rollers.

6. Device according to claim 5,
**characterized in that** the rollers are held in a frame and form together with a mounted sheet a kind of holding basin for the liquid photopolymer.

7. Device according to claim 6,
**characterized in that** the holding basin consisting of frame, rollers and mounted sheet forms an exchangeable unit.

8. Device according to claim 1 or 4,
**characterized in that** the reference plane is formed as transparent plate, and the separation layer is also transparent.

9. Process for the separation of a material layer (4) material layer (4) having been hardened on a flat plane (2) which serves as a reference, by means of a flexible, elastic separation layer (1) formed in the form of a sheet and arranged between the plane and the material layer, formed in the form of a sheet, wherein a device according to one of claims 1-8 is used.

## Revendications

1. Dispositif servant à séparer une couche de matériau (4) durcie sur un plan (2) plan faisant office de référence à l'aide d'une couche de séparation (1) élastique flexible disposée entre le plan et la couche de matériau, réalisée sous la forme d'un film, sachant qu'un milieu sous forme gazeuse ou liquide peut circuler entre le film et le plan,
**caractérisé en ce que** le film n'adhère pas au plan, et **en ce qu'**une chambre plate est réalisée entre le plan (2) et le film (1), sachant que le film (1) est coincé dans un cadre et forme, en combinaison avec ce dernier, une unité et fait office de bassin de réception pour le matériau.

2. Dispositif selon la revendication 1,
**caractérisé en ce que** le bassin de réception constitué du cadre et du film forme une unité remplaçable.

3. Dispositif selon la revendication 1 ou 2,
**caractérisé en ce que** le film est utilisé sous la forme d'un verre mince flexible.

4. Dispositif servant à séparer une couche de matériau (4) durcie sur un plan (2) plan faisant office de référence à l'aide d'une couche de séparation (1) élastique flexible disposée entre le plan et la couche de matériau, sachant que
- la couche de séparation élastique est réalisée sous la forme d'un film (1) hautement élastique et
- le film (1) est étiré au cours de l'opération de séparation dans le plan de référence,
**caractérisé en ce**
- **que** le film (1) n'adhère pas au plan (2), et
- **que** le film (1) hautement élastique est réalisé en lien avec un cadre supplémentaire à partir du même matériau ou d'un autre matériau pour obtenir une sorte de bassin, dans lequel se trouve un matériau liquide durcissant sous l'action de la lumière.

5. Dispositif selon la revendication 4,
**caractérisé en ce que** le cadre du bassin est formé en ce que le film est coincé dans deux rouleaux se faisant face et peut être étiré par une rotation des rouleaux dans le sens opposé.

6. Dispositif selon la revendication 5,
**caractérisé en ce que** les rouleaux sont maintenus dans un cadre et forment, conjointement avec le film coincé, une sorte de bassin de réception pour le photopolymère liquide.

7. Dispositif selon la revendication 6,
**caractérisé en ce que** le bassin de réception constitué du cadre, des rouleaux et du film coincé forme une unité remplaçable.

8. Dispositif selon la revendication 1 ou 4,
**caractérisé en ce que** le plan de référence est réalisé sous la forme d'un panneau transparent, et **en ce que** la couche de séparation est transparente de la même manière.

9. Procédé servant à séparer une couche de matériau (4) durcie sur un plan (2) plan faisant office de référence à l'aide d'une couche de séparation (1) élastique flexible disposée entre le plan et la couche de matériau, réalisée sous la forme d'un film, dans le cadre duquel un dispositif selon l'une quelconque des revendications 1 à 8 est utilisé.
